# EUROPÄISCHE PATENTSCHRIFT

(11) **EP 0 466 684 B1**
(45) Veröffentlichungstag und Bekanntmachung des Hinweises auf die Patenterteilung: **14.09.1994**
(21) Anmeldenummer: 91890149.7
(22) Anmeldetag: 11.07.1991
(51) Int. Cl.: B23B 49/04, G01M 1/24

(54) **Verfahren zum wuchtenden Zentrieren teilweise spanend zu bearbeitender Werkstücke, insbesondere Kurbelwellen**
Method for balanced centering of workpieces which are to be partially machined, particularly crank shafts
Procédé pour le centrage équilibré de pièces devant être partiellement usinées, en particulier de vilebrequins

(30) Priorität: 13.07.1990 AT 1491/90
(43) Veröffentlichungstag der Anmeldung: 15.01.1992
(73) Patentinhaber: GFM Gesellschaft für Fertigungstechnik und Maschinenbau Aktiengesellschaft, A-4403 Steyr (AT)
(72) Erfinder: Kirchberger, Peter, A-3350 Haag (AT)
(74) Vertreter: Hübscher, Heiner, Dipl.-Ing.

(56) Entgegenhaltungen:
- EP-A- 0 175 803
- EP-B- 0 268 724
- DE-A- 2 823 219

## Beschreibung

Die Erfindung bezieht sich auf ein Verfahren zum wuchtenden Zentrieren von Werkstücken, insbesondere Kurbelwellen, die längs ihrer Drehachse unbearbeitet bleibende und spanend zu bearbeitende Werkstückbereiche aufweisen, durch Setzen von stirnseitigen Zentrierbohrungen und/oder Rundbearbeiten von umfangseitigen Spannflächen, nach dem das Werkstuck vor der Bearbeitung bezüglich seiner Drehachse im Sinne einer Unwuchtverminderung in seiner Lage und/oder Massenverteilung verändert und dann, gegebenenfalls nach einem Ablängen, mit den die gewuchtete Zentrumslage und die zugehörende Drehachse festlegenden Zentrierbohrungen bzw. Spannflächen versehen wird, wobei für die Bestimmung von Größe und Richtung bzw. Positionierung der Lage und/oder Massenänderung des Werkstuckes die durch die unbearbeitet bleibenden Werkstückbereiche bedingten Unwuchten als maßgebend herangezogen werden.

Ein solches Wuchtzentrieren wurde gemäß der EP-B1-0 268 724 bereits vorgeschlagen, um im Zuge der Werkstückfertigung auf rationelle Weise ein einwandfreies Werkstückwuchten gewährleisten zu können. Aufgrund der Mißachtung der durch die zu bearbeitenden Werkstückbereiche bedingten Unwuchten verläuft die mit den Zentrierbohrungen oder Spannflächen fixierte Drehachse nach dem Wuchten lediglich bezüglich der unbearbeitet bleibenden Werkstückteile wuchtend und führt demnach dann für das an die Bearbeitung anschließende End-Wuchten zu einem optimalen VorWuchten, da ja die Werkstückbearbeitung auf die durch die Zentrierung bestimmte Drehachse ausgerichtet ist und unter Beseitigung der durch die zu bearbeiteten Werkstückbereiche bedingten Unwuchten die durch die entsprechende konstruktive Werkstückgestaltung vorbestimmte, zur Drehachse wuchtige Massenverteilung mit sich bringt. Das End-Wuchten kann sich daher auf ein Feinwuchten beschränken, das rationell durchführbar ist und auch bei Werkstücken mit unbearbeitet bleibenden Bereichen einen vollständig ausgewogenen Rundlauf um die gegebene Drehachse sicherstellt.

Um dabei die Größe und Richtung der Werkstückverlagerung zu bestimmen, werden bisher die unbearbeitet bleibenden Werkstückbereiche in ihren vorhandenen Außenformen vermessen und mittels eines Rechners im Vergleich mit den Sollformen eines idealen Werkstückes verrechnet. Allerdings ist es verhältnismäßig schwierig und umständlich, die Vermessung der rohen Werkstückbereiche mit erforderlicher Genauigkeit vorzunehmen, so daß es dazu spezieller und sehr aufwendiger Meßeinrichtungen bedarf.

Der Erfindung liegt daher die Aufgabe zugrunde, diese Mängel zu beseitigen und ein Verfahren der eingangs geschilderten Art so zu verbessern, daß es verhältnismäßig einfach durchzuführen ist und auch ohne übermäßigen Meßaufwand in der Praxis gehandhabt werden kann.

Die Erfindung löst diese Aufgabe dadurch, daß zur Bestimmung der Werkstücklage und/oder Massenänderung zuerst einerseits die Gesamtunwucht des vorliegenden Werkstuckes über eine dynamische Wuchteinrichtung und andererseits die durch die zu bearbeitenden Werkstückbereiche bedingte Unwucht durch Vermessen ihrer vorhandenen Außenformen rechnerisch ermittelt und dann diese Unwuchten miteinander in einem geeignet programmierten Rechner zur Berechnung der durch die unbearbeitet bleibenden Werkstückbereiche bedingten Unwucht verknüpft werden.

Die Gesamtunwucht des Werkstückes ist problemlos in üblicher Weise auf dynamischem Wege zu erfassen und bildet gewissermaßen den Ausgangspunkt für die Ermittlung der gewünschten Wucht- und Zentriergrößen. Da die zu bearbeitenden Werkstückteile Zylinderflächen darstellen, ist deren Vermessung im Vergleich zu den unbearbeitet bleibenden Werkstückbereichen beträchtlich einfacher und unkomplizierter und kann auch ohne spezielle Hilfsmittel vorgenommen werden, und zwar entweder direkt in der Wuchtzentriermaschine vor dem eigentlichen Einspannen des Werkstückes oder auch außerhalb der Maschine auf einem eigenen Vermessungstisch od. dgl.. Die Gesamtunwucht und die durch die zu bearbeitenden Teile bedingte Unwucht können nun einem geeignet programmierten Rechner eingegeben werden, der diese beiden verknüpft und zu der Unwucht verrechnet, die der durch die restlichen unbearbeitet bleibenden Werkstückbereiche bedingten Unwucht entspricht. Die so berechnete Unwucht ist Grundlage für die erforderliche Werkstücklage- und/oder -massenänderung, so daß ein optimales Zentrieren und Vor-Wuchten gewährleistet ist, das sich rationell und praktisch auch auf jeder herkömmlichen, mit einem geeigneten Rechner kombinierten Wuchtzentriermaschine durchführen läßt.

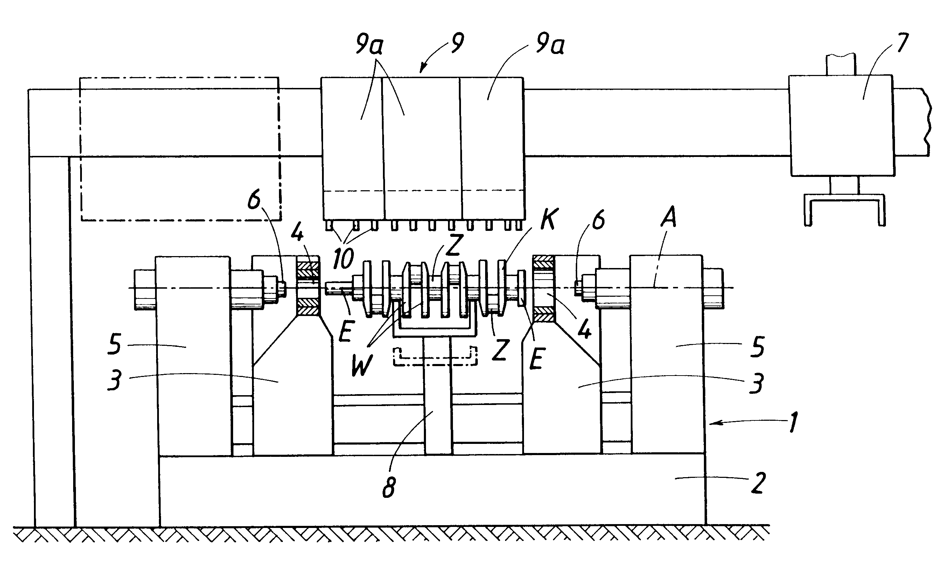

In der Zeichnung ist eine Wuchtzentriermaschine zum Durchführen des erfindungsgemäßen Verfahrens rein schematisch in einer teilgeschnittenen Seitenansicht veranschaulicht.

Um eine Kurbelwelle K, die in den Umfangsbereichen der Kurbelwangen W unbearbeitet bleibt und bei der Fertigstellung nur an den Lager- und Hubzapfen Z sowie an ihren Enden E bearbeitet wird, hinsichtlich einer Vereinfachung und Verbesserung des an die Fertigung anschließenden Wuchtens bereits beim Zentrieren vor der Bearbeitung vorwuchten zu können, ist eine Wuchtzentriermaschine 1 vorgesehen, die auf einem Grundbett 2 längsverfahrbare Spannstöcke 3 aufweist. Zur Aufnahme des Werkstückes K besitzen die Spannstöcke 3 Spannvorrichtungen 4, die durch nicht weiter dargestellte Antriebe dreh- und querverschiebbar gelagert sind. Spindelaggregate 5 sind jeweils außerhalb der Spannstöcke 3 ebenfalls längsverfahrbar am Grundbett 2 angeordnet und tragen Werkzeugaufnahmen 6 zur Aufnahme von Werkzeugen für die Endenbearbeitung des Werkstückes und zum Setzen der Zentrierbohrungen. Eine Ladeeinrichtung 7 ermöglicht das Einlegen bzw. Wechseln eines Werkstückes K, und eine hochfahrbare Auflagestütze 8 kann zum Ablegen des Werkstückes vor und nach dem Festspannen oder zum Vermessen vorgesehen sein.

Ein Meßkopf 9 erlaubt ein Vermessen des zu wuchtenden Werkstückes, wobei vorzugsweise Lichtquellen und Sensoren 10 für die Ermittlung der Meßdaten sorgen. Der Meßkopf 9 kann dabei, um das ganze Werkstück auf einmal vermessen zu können, aus einzelnen Meßeinheiten 9a zusammengesetzt sein, es ist aber auch möglich, nur eine Meßeinheit 9a zum abschnittsweisen Vermessen der Welle einzusetzen.

Beim wuchtenden Zentrieren ist nun die Kurbelwelle K quer zu verlagern, bis die Lage der Drehachse A, die durch das Setzen von stirnseitigen Zentrierbohrungen oder umfangseitigen Spannflächen festgelegt wird, so eingerichtet ist, daß die Massenverteilung der tatsächlichen Kurbelwelle K eine möglichst geringe Unwucht verursacht. Dieses wuchtende Ausrichten der Drehachse erfolgt durch die entsprechende Querverlagerung der Kurbelwelle K bevor die Spindelaggregate 5 die Zentrierbohrungen in die Werkstückenden E einbohren und damit die tatsächliche Drehachse A bestimmen, die von der rein theoretischen Drehachse des idealen Werkstückes abweicht. Für die Bestimmung von Größe und Richtung der Werkstückverlagerung werden allerdings nur die durch die unbearbeitet bleibenden Werkstückbereiche, also die Kurbelwangen W bedingten. Unwuchten herangezogen, nicht aber die zu bearbeitenden Werkstückbereiche, die Zapfen Z und die Enden E. Die im Rohzustand von diesen zu bearbeitenden Werkstückbereichen hervorgerufenen Unwuchten werden ja bei der eigentlichen Werkstückbearbeitung, die gegenüber der Drehachse A zentriert ist, ohnehin beseitigt, so daß durch eine Berücksichtigung dieser Unwucht im Hinblick auf das fertige Werkstück falsche Voraussetzungen gegeben wären.

Um nun Größe und Richtung der Querverlagerung bestimmen und diese korrigierende Werkstückverlagerung rationell vornehmen zu können, wird einerseits über eine nicht weiter dargestellte dynamische Wuchteinrichtung die Gesamtunwucht der Kurbelwelle K ermittelt und einem ebenfalls nicht weiter dargestellten Rechner eingegeben. Dann werden über den Meßkopf 9 die zu bearbeitenden Werkstückbereich, also die Enden E und die Hub- und Lagerzapfen Z, vermessen, was auf Grund der Zylinderform dieser Teile keine Schwierigkeiten bereitet, und diese Meßdaten ebenfalls dem Rechner eingegeben, der nun die Gesamtunwucht und die durch die zu bearbeitenden Teile bedingte Unwucht im Vergleich zu einer idealen Soll-Kurbelwelle miteinander verknüpft und eine Unwucht bestimmt, die der durch die unbearbeitet bleibenden Werkstückbereichen W bedingten Unwucht entspricht. Diese berechnete Unwucht ist nun maßgebend für die Bestimmung der Kurbelwellenquerverlagerung, wobei der Rechner gleich für die erforderliche Ansteuerung der Spannfutterantriebe od.dgl. sorgt.

## Patentansprüche

1. Verfahren zum wuchtenden Zentrieren von Werkstücken (K), insbesondere Kurbelwellen, die längs ihrer Drehachse (A) unbearbeitet bleibende und spanend zu bearbeitende Werkstückbereiche aufweisen, durch Setzen von stirnseitigen Zentrierbohrungen und/oder Rundbearbeiten von umfangseitigen Spannflächen, nach dem das Werkstück (K) vor der Bearbeitung bezüglich seiner Drehachse (A) im Sinne einer Unwuchtverminderung in seiner Lage und/oder Massenverteilung verändert und dann, gegebenenfalls nach einem Ablängen, mit den die gewuchtete Zentrumslage und die zugehörende Drehachse (A) festlegenden Zentrierbohrungen bzw. Spannflächen versehen wird, wobei für die Bestimmung von Größe und Richtung bzw. Positionierung der Lage- und/oder Massenänderung des Werkstückes (K) die durch die unbearbeitet bleibenden Werkstückbereiche bedingten Unwuchten als maßgebend herangezogen werden, dadurch gekennzeichnet, daß zur Bestimmung der Werkstücklage- und/oder -massenänderung zuerst einerseits die Gesamtunwucht des vorliegenden Werkstückes über eine dynamische Wuchteinrichtung und andererseits die durch die zu bearbeitenden Werkstückbereiche bedingte Unwucht durch Vermessen ihrer vorhandenen Außenformen rechnerisch ermittelt und dann diese Unwuchten miteinander in einem geeignet programmierten Rechner zur Berechnung der durch die unbearbeitet bleibenden Werkstückbereiche bedingten Unwucht verknüpft werden.

## Claims

1. A method of combined balancing and centring of workpieces (K), more particularly crankshafts, having along their axis of rotation (A) zones which are left unmachined and zones which are required to be machined, by the drilling of centring holes in the end faces and/or circular machining of peripheral chucking surfaces, in which method the axis of rotation (A) of the workpiece (K) is changed in respect of its position and/or mass distribution for the purpose of reducing any imbalance, before machining, and then, after facing to length if required, is provided with the centring holes or chucking surfaces which determine the balanced central position and the associated axis of rotation (A), determination of the size and magnitude, and the positioning of the change of position and/or mass of the workpiece (K) being governed by the imbalance due to the workpiece zones which are left unmachined, characterised in that for the purpose of determining the change of the workpiece position and/or mass there are computed, on the one hand, the total imbalance of the workpiece by a dynamic balancing means and, on the other hand, the imbalance due to the workpiece zones for machining, by surveying their external shapes, and then these imbalances are combined with one another in a suitably programmed computer to calculate the imbalance due to the workpiece zones which are left unmachined.

## Revendications

1. Procédé de centrage à effet équilibrant de pièces façonnées (K), en particulier de vilebrequins, restant non usinés le long de leur axe de rotation (A) et présentant des zones de pièce façonnée destinées à un usinage avec enlèvement de copeaux, par creusement de perçages de centrage frontaux et/ou d'usinages de tournage de surfaces de serrage périphériques, procédé selon lequel la pièce façonnée (K) subit avant usinage une modification quant à son axe de rotation (A), allant dans le sens d'une diminution de la position du balourd et/ou d'une modification de la distribution des masses, puis, le cas échéant après découpe à longueur, étant pourvue de perçages de centrage, respectivement de surfaces de serrage, ayant pour effet de fixer la position équilibrée du centre et celle de l'axe de rotation (A) afférent, les valeurs des balourds, tels qu'imputables aux zones restant non usinées de la pièce façonnée, étant utilisées, principalement, pour la détermination de la valeur et de la direction, respectivement du positionnement, de la modification de position et/ou de masse de la pièce façonnée (K),
caractérisé en ce que pour déterminer la modification de la position et/ou de la masse de la pièce façonnée, on détermine d'abord, d'une part, le balourd total de la pièce façonnée telle qu'elle se présente, par l'intermédiaire d'un dispositif d'équilibrage dynamique, et, d'autre part, on détermine par calcul, par mesure de ses formes extérieures existantes, le balourd imputable aux zones de pièces façonnée devant être usinées, puis l'on combine ces balourds ensemble, dans un ordinateur à programme approprié, en vue de calculer le balourd imputable aux zones de pièces façonnée restant non usinées.
